# EUROPEAN PATENT APPLICATION

(11) **EP 1 785 190 A1**
(43) Date of publication of application: **16.05.2007**
(21) Application number: 05388095.1
(22) Date of filing: 09.11.2005
(51) Int. Cl.: B01L 3/02

(54) **Synthesis apparatus having rotatable, interchangeable reaction holders**

(71) Applicant: JEPSEN, Peter, 3500 Vaerlose (DK)
(72) Inventor: JEPSEN, Peter, 3500 Vaerlose (DK)
(74) Representative: Nielsen, Henrik Sten

(57) **Abstract**

An oligo peptide synthesis apparatus comprises a housing and a drive motor mounted in the housing and having an output shaft. The oligo peptide synthesis apparatus further comprises an oligo peptide synthesis reaction holder defining a centre line and comprising a number of receptors for receiving a corresponding number of vessels. The receptors are located on a first circle having its centre on the centre line. The holder has a coupling for connecting the holder to the drive motor, the holder being journalled horizontally and rotatably relative to the housing for stepwise revolving around the centre line relative to the housing powered by the drive motor. The oligo peptide synthesis apparatus further comprises a number of synthesis material lines supported relatively to the housing, each of the lines communicating with a supply container and each of the lines defining a discharge end. The discharge ends are positioned on a second circle having its centre on the centre line for allowing a specific discharge end to be positioned above a specific vessel received in the holder.

## Description

This invention relates to an oligo peptide synthesis apparatus.

Additionally, the invention relates to a reaction holder, which is applied in the oligo peptide synthesis apparatus.

Moreover, the invention relates to a method of performing an oligo peptide synthesis by means of the oligo peptide synthesis apparatus.

When a synthesis is performed a chemical compound is build up by synthesis materials containing suitable ingredients. Often the synthesis comprises a large number of synthesis materials, which are added together in a predetermined planned sequence.

In the drug industry time to market, development and test costs are competitive parameters. For instance, in order synthesise DNA it is required to perform excessive synthesis and subsequent tests with the resulting products of the synthesis. A DNA undergoes the following steps: detritylation, activation, coupling, capping and oxidation. A more detailed explanation can be found in US 5,656,741, which hereby is incorporated by reference. Moreover, Jesper Wengels "Synthesis of 3'-C and 4' - C-branched oligodeoxnucleotides and the development of locked nucleic acid", accounts of chemical research, 1999, page 32 and pages 301-310 discusses DNA synthesis.

In order to select a DNA chain an excessive number of comparable and dissimilar DNA chains are typically build up. Such synthesis typically requires a lot of manual handling where DNA building blocks - so called nucleosides - A, T, C and G are combined into chains of varying length.

Such synthesis typically is performed in an apparatus in which wells or columns are located on a reaction holder, e.g. a plate with corresponding receptors. Each well or column is in the first place provided with a first nucleoside. Subsequently, synthesis material, i.e. a solution of the four DNA building blocks, i.e. dA amidit, dC amidit, dG amidit and T amidit along with other synthesis materials - typically five helping reagents: tetrazol solution, Cap A and Cap B solutions, ion solution and trichloro-acetic acid solution as well as acetonitrile as a rinsing agent - are supplied in proper amounts to the first nucleoside. Alternatively, equivalence of the helping reagents and/or of the DNA building blocks is/are applied.

Laboratory staff will use as little as possible of the synthesis material and optimise - during the synthesis planning - to use a limited amount of synthesis material and accordingly an optimal number and optimal type of wells and columns. This accordingly calls for varying sized and a varying numbers of wells or columns located on the reaction holder and for an apparatus which securely can provide the synthesis materials to the reaction holder. A requirement is then - to save cost and time - that the reaction holder easily can be switched to change the numbers of wells and/or columns to be located on the reaction holder. A further requirement is that the reaction holder can be utilised with different numbers, types, shaped and sized wells and columns.

An apparatus is known in the art which apparatus uses X-Y positioning when synthesis material from a pipette or from a number of pipettes are to be delivered to a corresponding number of vessels. Such apparatus is complicated to manufacture since robotic technology (arm, accurate positioning of the arm, control circuitry, etc) is involved. Moreover, since movements are performed in right-angled X-Y directions the travelling along these movements take up time, and over time due to wear of parts (e.g. robotic arms) involved in the linear movements, movements tend to be less accurate, which in the worst results in that the synthesis materials are not properly delivered to the vessels from corresponding pipettes.

Accordingly, there is a need for an apparatus, which is simple to manufacture, with speedy movements of the pipettes to the vessels and with a high positioning accuracy of the movement and with reliable movements.

It is an object of the present invention to provide a reaction holder - and an apparatus in which the holder can be applied - which reaction holder easily can be switched.

Accordingly, it is an object of the present invention to provide a method having the objects of the apparatus and the reaction holder.

In order to speed up the process of switching the reaction holder it is an object that this can be done fast and without the use of handtools.

It is an object of the present invention to provide the apparatus and the holder such that the reaction holder can be provided with varying shapes, sizes and numbers of wells and/or columns.

It is an object of the present invention to provide the apparatus and the reaction holder which each is simple to manufacture and which provide speedy movements of supply to vessels and with a high positioning accuracy of the movements.

The above object, the above advantage, and the above feature together with numerous other objects, advantages, and features which will be evident from the below detailed description of the present invention are in accordance with the teaching of the present invention obtained by an oligo peptide synthesis apparatus, comprising:
i) a housing,
ii) a drive motor mounted in the housing and having an output shaft,
iii) an oligo peptide synthesis reaction holder defining a centre line, the holder comprising a first number of receptors for receiving a corresponding number of vessels, the receptors being located on a first circle having its centre on the centre line, the holder having a coupling for connecting the holder to the drive motor, the holder being journalled horizontally and rotatably relative to the housing for stepwise revolving around the centre line relative to the housing powered by the drive motor, and
iv) a second number of synthesis material lines supported relatively to the housing, each of the lines communicating with a supply container and each of the lines defining a discharge end, the discharge ends being positioned on a second circle having its centre on the centre line for allowing a specific discharge end to be positioned above a specific vessel received in the holder.

The oligo peptide synthesis apparatus further comprising a bottom plate for rotating the holder, the bottom plate having engagement means for coupling to the holder.

The engagement means comprising carriers adapted to engage with corresponding holes located on the holder. However, alternatively it is possible to provide carriers on the holder and having complementary holes on the bottom plate.

The oligo peptide synthesis apparatus further comprising a top plate having the second number of synthesis material lines. Through means of these lines synthesis material is supplied to the vessels on the reaction plate.

The top plate, bottom plate and the holder each being made of a plate of a substantially circular shape having its centre on the centre line. Hereby, the construction is industrial design and can possibly be connected to a shaft located along the centre line. Through means of such shaft stepwise rotation of the holder can be achieved.

By means of the top plate, the bottom plate and the holder connected to the shaft a sandwich construction of an elegant design is made.

The top plate most preferably being made of a POM material, preferably of PP, PE, PEEK, aluminium, glass or stainless steel materials.

The holder most preferably being made of a POM material, preferably of PP, PE, glassfilled PE, PEEK, PTFE, aluminium or stainless steel materials.

The bottom plate most preferably being made of a POM material, preferably of PP, PE, PA, PEEK, PTFE, aluminium or stainless steel materials.

The oligo peptide synthesis apparatus further as an option comprises an enclosure assembly defining an inner chamber in which the reaction holder is enclosed and communicating with a vacuum pump for evacuation of the inner chamber. The enclosure assembly could be made of e.g. a half sphere enclosing the reaction plate and for example the half sphere is provided with an O-ring to seal the half sphere - under which the reaction holder is enclosed - to a horizontally placed plate upon which the reaction plate is journalled.

Hereby, the reaction holder can be sealed from entrain of atmospheric air, this is an advantage since synthesis material - in the vessels - must not be subjected to humidity from the atmospheric air. Moreover, the vacuum pump evacuating atmospheric air from the inner chamber furthermore ensures that the synthesis material is not subjected to humid from the atmospheric air.

The above object, the above advantage, and the above feature together with numerous other objects, advantages, and features which will be evident from the below detailed description of the present invention are in accordance with the teaching of the present invention obtained by an oligo peptide synthesis reaction holder defining a centre line, the holder comprising a first number of receptors for receiving a corresponding number of vessels, the receptors being located on a circle having its centre on the centre line and the holder having a coupling for connecting the holder to a drive motor for stepwise revolving the holder.

The reaction holder having an index point indicating the revolved position of the reaction holder. Hereby - during revolving of the reaction holder - software receiving a signal from a sensor seeing the index point can be used to locate an initial starting position for the reaction holder. Accordingly, with this known starting position any other position the reaction holder is revolved can be related to the starting position.

The number of receptors is 10-1000, such as 10 - 900, e.g. 100 - 800, preferably 200 - 700, further preferably 200 - 500, 300 - 400, 300 - 350, 350 - 400, 400 - 450 and 450 - 500.

The vessels comprise a number of wells, a number of columns or combinations thereof. It is hereby an advantage that the reaction plate can be configured with any number of wells or columns up to the number of receptors present on the reaction plate. Typically, the wells or columns are located along one or more concentric circles having their centre on the mentioned centre line.

The vessels each having a filter comprising a polystyrene surface or controlled pore glass (CPG).

The holder being made of a plate of a substantially circular shape having its centre on the centre line. With the wells and/or columns are located along concentric circles a step wise revolving of the reaction plate easily move the plate - relatively to the top plate - between two adjacent vessels. Accordingly, synthesis material lines are located along concentric circles, e.g. on the top plate. Correspondingly, step wise revolving of the reaction plate easily move the plates vessels between two adjacent synthesis material lines. Hereby, synthesis material can speedily - from the adjacent circular located synthesis material lines - be provided to vessels located on the circle having the same radius below on the top plate.

The holder most preferably being made of a POM material, preferably of PP, PE, PEEK, PTFE, aluminium or stainless steel materials.

The above object, the above advantage, and the above feature together with numerous other objects, advantages, and features which will be evident from the below detailed description of the present invention are in accordance with the teaching of the present invention obtained by a method of performing an oligo peptide synthesis by means of the oligo peptide synthesis apparatus, the method comprising the steps of:
mounting a reaction holder in the oligo peptide synthesis apparatus,
revolving the reaction holder for finding its initial starting position, if the initial starting position is not known from a former run,
revolving the reaction holder for being in position under a specific synthesis material line,
discharging synthesis material to a vessel,
allowing a timer to run for a predetermined time,
sucking synthesis material from the vessel, and
removing the reaction holder from the oligo peptide synthesis apparatus.

As can be seen from the steps above the reaction holder easily can be mounted and removed or switched without the use of hand-tools.

The invention will be explained more fully below in connection with preferred embodiments and with reference to the drawings, in which:
fig. 1 is an overview of an embodiment of the synthesis apparatus,
fig. 2 is an overview of an embodiment of the synthesis apparatus with supply containers,
fig. 3 is an overview of an embodiment of the synthesis apparatus with supply containers, a top cover plate, a reaction holder and a bottom plate,
fig. 4 shows an embodiment of the synthesis apparatus with control of the top cover plate in an up and down movement.
fig. 5 shows an exploded perspective drawing of an embodiment of the synthesis apparatus's alternative to the top cover plate, the reaction holder and the bottom plate.
fig. 6 shows a perspective drawing of an embodiment of the synthesis apparatus's alternative to the top cover plate, the reaction holder and the bottom plate.
fig. 7 shows a drawing of an embodiment of the synthesis apparatus's alternative to the top cover plate, the reaction holder and the bottom plate.
fig. 8 shows a perspective drawing and a cross sectional view of an embodiment of the synthesis apparatus's reaction holder,
fig. 9 shows a perspective drawing and a cross sectional view of an embodiment of the synthesis apparatus's reaction holder,
fig. 10 shows a perspective drawing and a cross sectional view of an embodiment of the synthesis apparatus's reaction holder,
fig. 11 shows a perspective drawing and a cross sectional view of an embodiment of the synthesis apparatus's reaction holder,
fig. 12 shows a perspective drawing of an embodiment of the synthesis apparatus's top cover plate, reaction holder and gallows,
fig. 13 shows a perspective drawing and a cross sectional view of an embodiment the synthesis apparatus's soft walled supply container,
fig. 14 shows a perspective drawing and a cross sectional view of an embodiment the synthesis apparatus's rigid walled supply container,
fig. 15 shows a drawing of synthesis material flow and dry air flow along with a method description,
fig. 16 shows an embodiment of synthesis apparatus with a part list,
fig. 17 shows an embodiment of synthesis apparatus with a part list,
fig. 18 shows an embodiment of synthesis apparatus with material selection,
figures 19-25 show electronic diagrams for the control of the synthesis apparatus.

Throughout the drawings, the same reference numerals indicate identical elements or components. In the present specification, components or elements identical to components or elements, respectively, described previously with reference to a preceding figure are designated the same reference numerals and components or elements differing from previously described components or elements, respectively, however serving the same overall purpose, are designated the same integer as the previously described component or element, however, added a marking for identifying the structural difference from the previously described component or element.

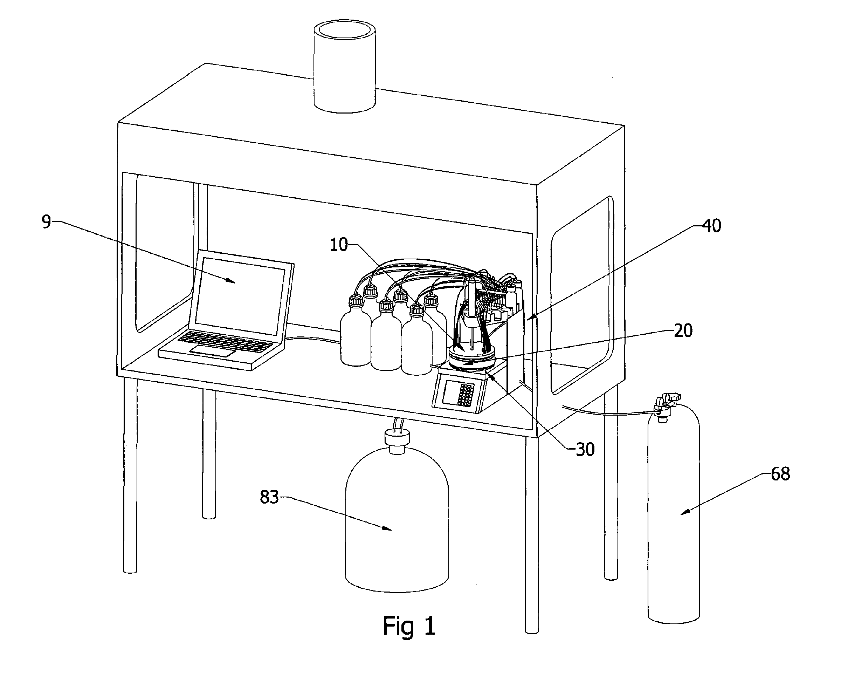

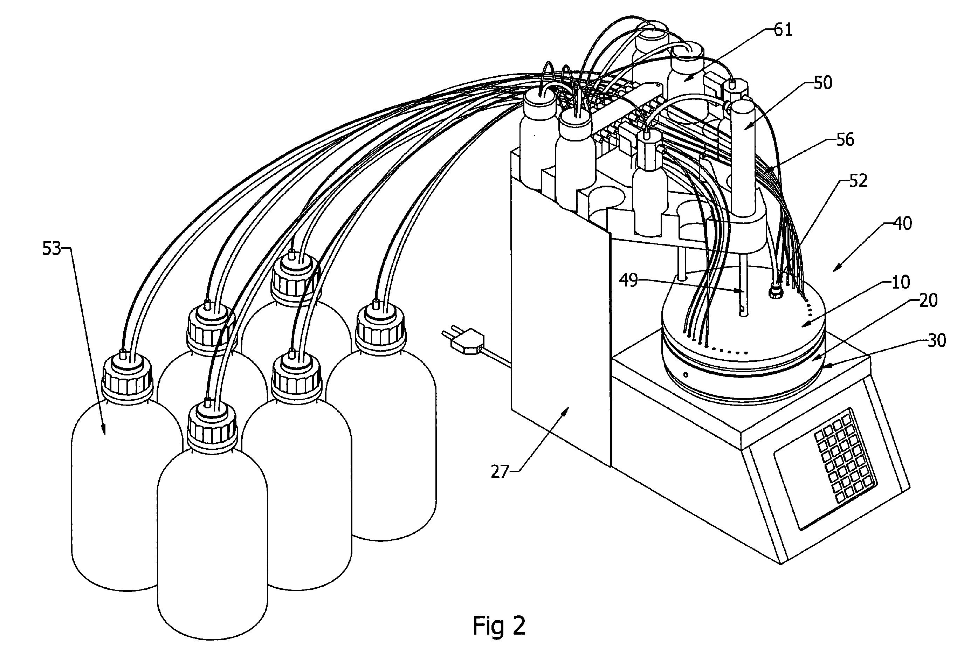

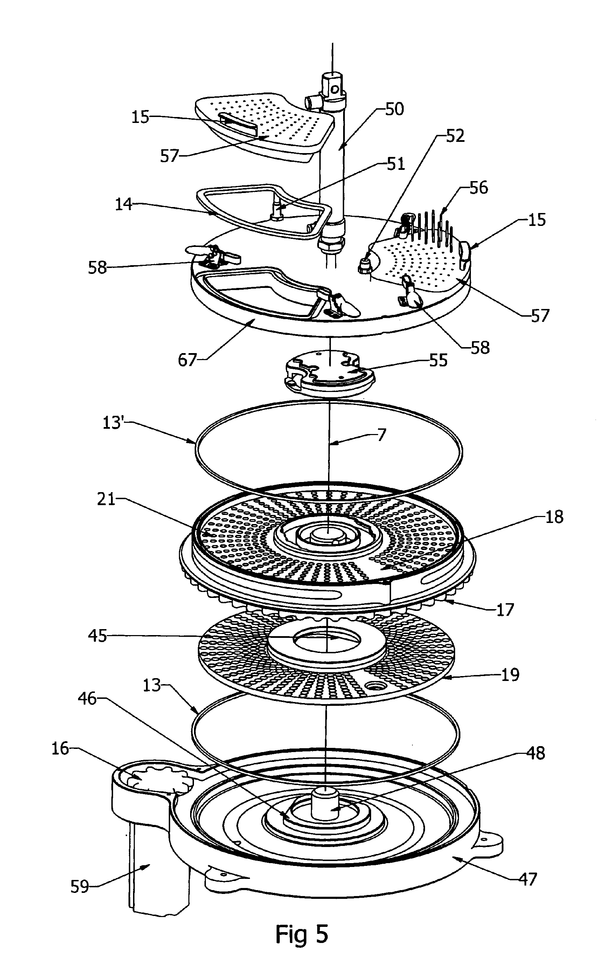

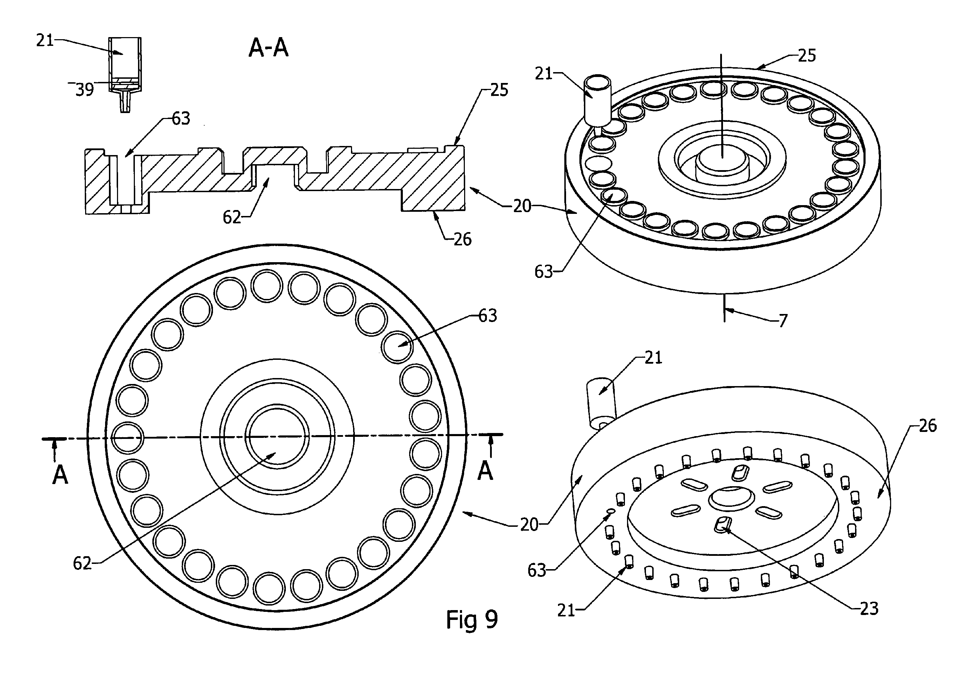

fig. 1 is an overview of an embodiment of the synthesis apparatus. The synthesis apparatus 40 is an automated PC 9 controlled apparatus. In general, synthesis material, i.e. helping reagents: tetrazol solution, Cap A and Cap B solutions, ion solution and trichloro-acetic acid solution as well as acetonitrile as a rinsing agent from more synthesis material supply containers 53 (see figure 2) are supplied - by means of synthesis material lines 56 (see figure 5) - to the vessels 21 located in receptors 63 (see figure 9) on a reaction holder 20, which is sandwiched between a top cover plate 10 and a bottom plate 30. In the vessel a synthesis between synthesis materials takes place. When the synthesis is performed, waste materials can be pumped into a waste container 83. Typically, a exhaustion is provided to remove odour from the synthesis.

Moreover, by means of argon or helium provided from a bottle 68 supply containers 53 can be pressurised.

fig. 2 is an overview of an embodiment of the synthesis apparatus with supply containers. Synthesis material, i.e. a solution of the DNA building blocks, i.e. dA amidit, dC amidit, dG amidit and T amidit - from synthesis material supply containers i.e. these bottles 61 - are provided to and mixed in vessels located on the reaction holder 20. The reaction holder 20 is sandwiched between the top cover plate 10 and the bottom plate 30, which holder and plates 10, 20 and 30 are located on a platform housed 27 in the front operating section of the synthesis apparatus 40. The top cover plate 10 can be moved up and down by means of cylinder 50 having a piston rod fastened to the top cover plate 10. This enables that the reaction holder 10 can be removed and repositioned without the use of handtools.

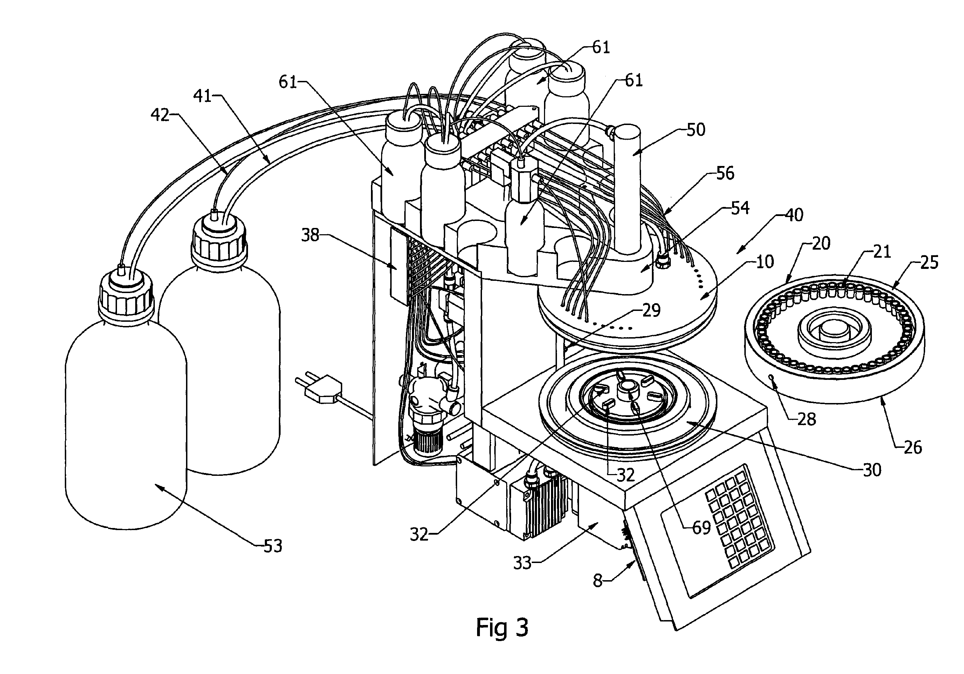

Synthesis material lines 56 are supported relatively to the housing 27, e.g. the synthesis material lines 56 with corresponding discharge ends are mounted on the top cover plate 10 to be in a very accurate position over openings of the vessels 21 (see figure 3), which vessels are located beneath on the reaction holder 20.

fig. 3 is an overview of an embodiment of the synthesis apparatus with supply containers, a top cover plate, a reaction holder and a bottom plate. Synthesis materials from supply containers, i.e. containers 53 and bottles 61 are somehow mixed to synthesise in vessels 21 located on the reaction holder 20. In order to control the synthesis material flow the synthesis apparatus 40 is provided with a switching block 38 to which in general supply line (pipe) 42 and a return line (pipe) 41 are connected, which lines typically are controlled by valves. The control takes place by means of controller, e.g. a personal computer 9 as shown on figure 1, alternatively an advanced PLC, Programmable Logic Controller could be applied, in both cases the computer or the controller communicates, i.e. a transfer of data takes place forth and back, with the printed circuit board 8 which in turn controls the valves through means of a corresponding number of solenoids, likewise pumps can be controlled. The communication of data between the computer or the controller and the printed circuit board takes place by means of a so called "Comm" port, e.g. by means of a so called 9 or 25 poled submini plugs mounted at the ends of the connecting cable. Alternatively, the communication between the controller and the printed circuit board 8 could take place by means of a USB connection or a wireless communication, e.g. an IrDa connection.

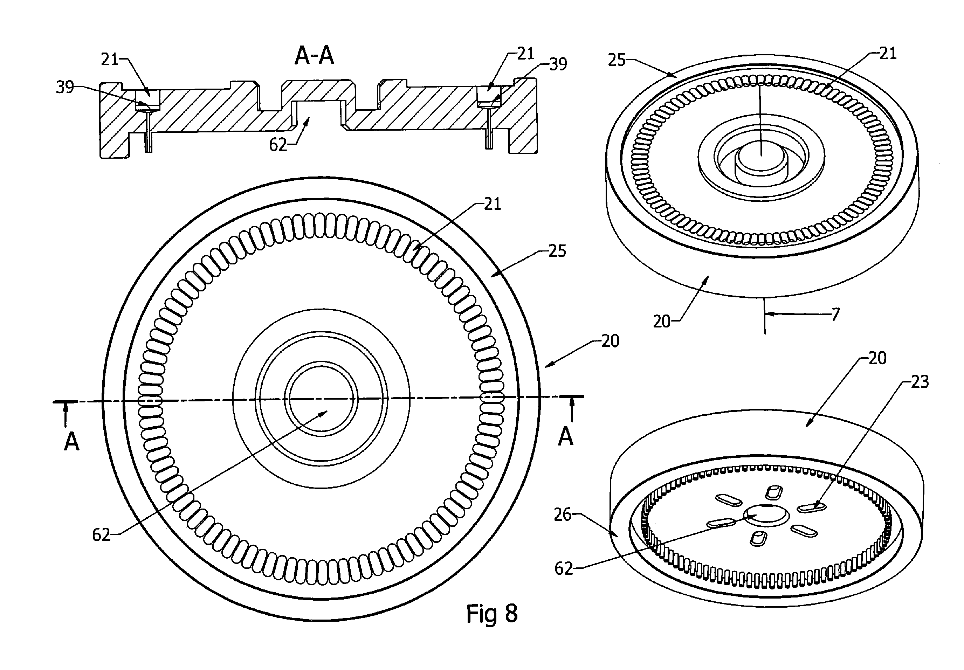

As discussed, the top cover plate 10 can be moved up and down by means of the cylinder 50, the cylinder is fastened on the synthesis apparatus' 40 bracket 54. The reaction holder 20 is sandwiched between the top cover plate 10 and the bottom plate 30. When the top cover plate 10 is moved down by means of the cylinder 50, i.e. the case where the reaction holder 20 is locked between the top cover plate 10 and the bottom plate 30, the reaction holder 20 is ready to be revolved. In order to revolve the reaction holder 10, the bottom plate is provided with a shaft 69 of a clutch 31 or with the output shaft 69 of a drive motor, which is a stepper motor. The reaction holder 20 defines a centre line 7 - see figure 8 - around which it is be brought to revolve. Alternatively, the reaction holder 20 could be directly connected - e.g. by means of a shaft - to the drive motor for stepwise revolving the reaction holder.

A drive 33, i.e. a stepper motor is connected to the clutch 31, whereby the reaction holder 20 can be moved stepwise or continuously in a revolved movement, clockwise or counter clock wise.

Typically, the reaction holder 20 is journalled horizontally and rotatably relative to the housing of the oligo peptide synthesis apparatus 40 for rotating round the centre line 7 and has coupling for connecting the holder 20 to the drive motor for stepwise revolving the holder 20 relative to the housing 27.

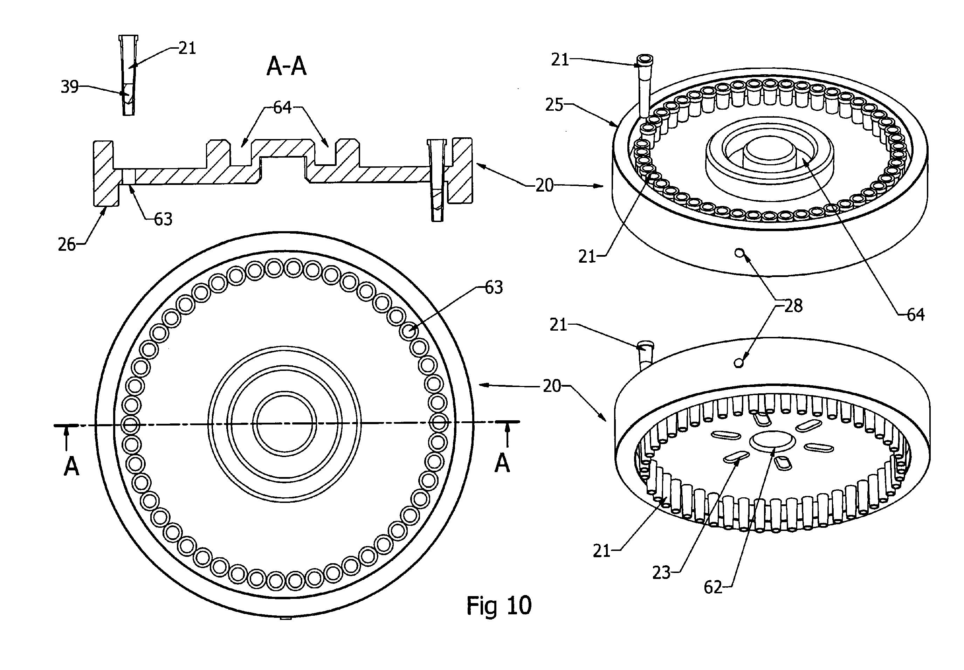

The bottom plate 30 is provided with co-operating engagement means 32 i.e. carriers 32 to be received in a corresponding number of holes 23, e.g. recesses in the lower surface 26 of the reaction holder 20, see figures 8 - 11 for the reaction holder's 20 recesses 23. When the reaction holder 20 is engaged with the bottom plate 30, i.e. the carriers 32 of the top of bottom plate are positioned into corresponding holes 23 belonging to the bottom of the reaction holder 20. The upper surface 25 of the reaction holder 20 faces and is sealed (e.g. by a gasket or an O-ring) to the top cover plate 10. Hereby, when the bottom plate 30 is brought to revolve - by means of the engagement discussed - the reaction holder 20 revolves with the same speed, starts and stops.

As an alternative to the hermetically sealing of the reaction holder (to the top cover plate and to the bottom plate), the reaction holder could be sealed directly to the frame (e.g. by a gasket with an O-ring) of the oligo peptide synthesis apparatus 40. In that case the gasket with the O-ring covers and thus hermetically seals the reaction holder to the frame (not shown).

In order to control the revolving of the reaction holder 20 an index point 28 and a sensor 29 is provided. The index point is a protruding element, e.g. a pin, screw or a tap. The sensor 29 is located on the bracket 54 or on the housing 27 (see fig 2) of the synthesis apparatus and the index point 28 is located on the peripheral rim of the reaction holder 20 in the same height as the sensor. The sensor could be a photocell, an inductive or a capacitive proximity sensor adjusted to sense the index point 28. The sensor 29 provides an electrical signal to the printed circuit board 8, which then knows when the index point in the revolving movement of the reaction holder passes or passed the sensor. By means of the stepper motor the reaction holder - by means of the connection to the bottom plate 30 - can be turned or revolved and positioned, e.g. in small steps each corresponding to the distance between two adjacent vessels.

In principle, more reaction holders 20 could be stacked on top of each other, e.g. two reaction holders are applied: a top reaction holder and a bottom reaction holder, the bottom of a vessel of the top reaction holder will be in communication with the top of a vessel of the bottom reaction holder and syntheses material will then be supplied such that the two vessels mentioned are sequentially supplied with synthesis material. Correspondingly, three, four, etc reaction holders 20 could be stacked on top of each other, etc.

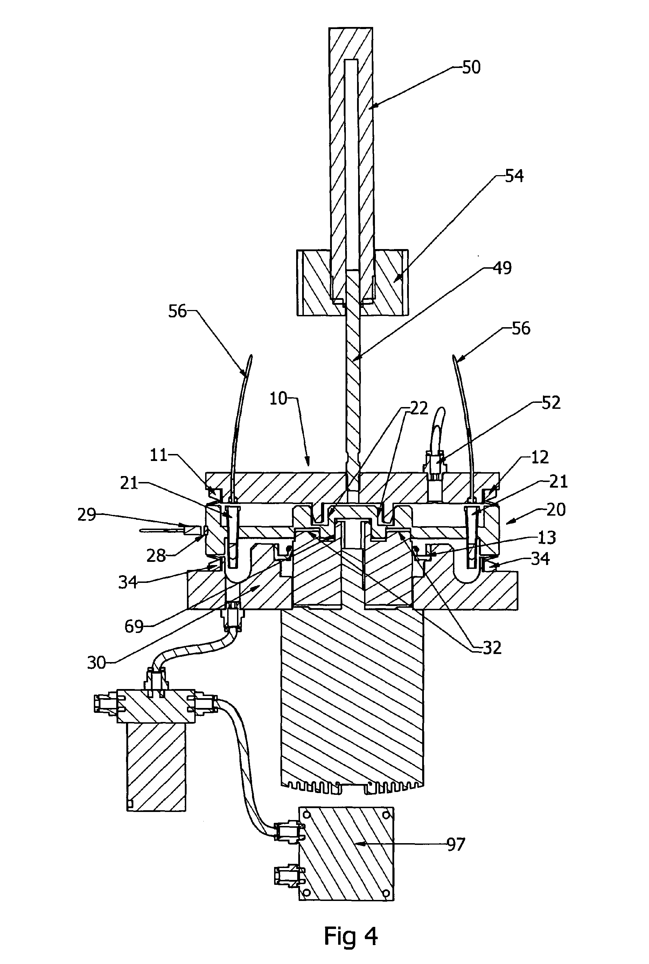

fig. 4 shows an embodiment of the synthesis apparatus with control of the top cover plate in an up and down movement. As previously discussed the top cover plate 10 can be moved up and down by means of the cylinder 50, which enables that the reaction holder 20 can be removed and repositioned without the use of handtools. The piston rod is screwed to the top cover plate and can by means of the printed circuit board 8 in conjunction with the controller be controlled to move up and down by means of air pressure supplied to the inlets of the cylinder 50.

The top cover plate 10 is sealed to the reaction holder 20 by means of a pair of gaskets 11, 12. A sealing of the reaction holder 20 to the bottom plate 30 is correspondingly performed by means of an O-ring 13 and a pair of gaskets 34. Hereby the reaction holder 20 can be pressurised - by means of argon or helium - via the coupling 52 connected to the bottle 68 containing the argon or helium. It is hereby avoided that humid, non-dry atmospheric air entrains. Accordingly, no humid atmospheric air entrains the vessels 21.

The bottom plate 30 is provided with carriers 32, se also figure 3. These are received in a corresponding number of recesses 23 in the lower surface 26 of the reaction holder 20, see figures 8 - 11 for the recesses in the reaction holder 20. However, it is possible to achieve a coupling between the bottom plate 30 and the reaction holder 20 when the reaction holder 20 is provided with carriers and the bottom plate 30 with corresponding complementary holes or recesses.

The shaft 69 (of the clutch 31 or motor) fits into the shaft receiver hole 62 (see figures 8 - 11) in the reaction holder. This fit of the shaft 69 in the hole 62 stabilises the coupled connection between the bottom plate 30 and the reaction holder 20. Accordingly, the reaction holder 20 is very stable and is moved with a high position accuracy, which in turn also provides a high precision for the stopped position. Accordingly, a high precision for the stopped position of the vessel 21 on the reaction holder 20 is achieved. This is important since synthesis material lines 56 have to be in a very accurate position over the vessels 21. This ensures that no synthesis material is spilled or wasted when synthesis material lines 56 provide the synthesis material to the vessels 21.

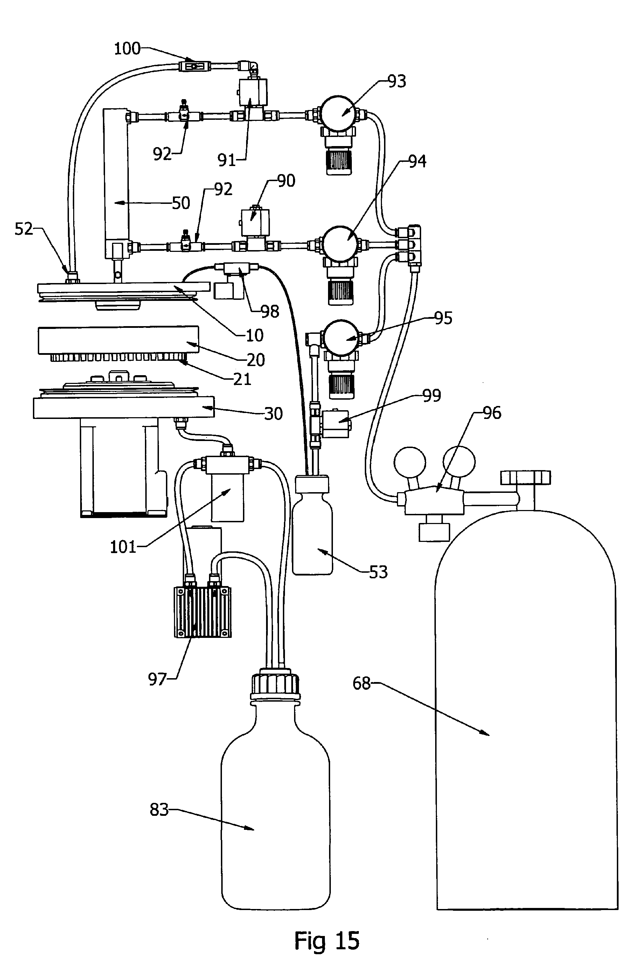

The function of the vacuum pump 97 will be explained in connection with figure 15.

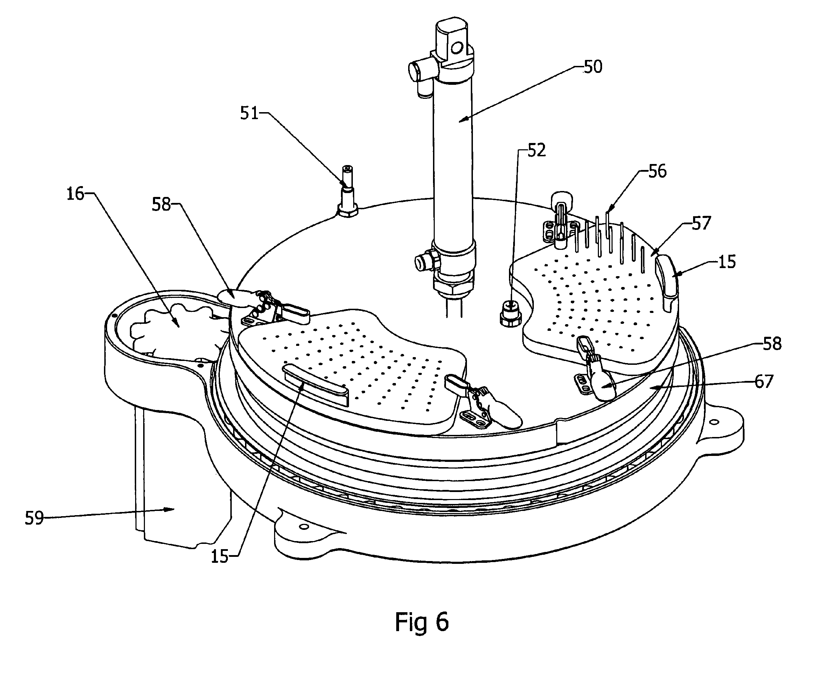

fig. 5, 6 and 7 each show an embodiment of the synthesis apparatus's alternative to the top cover plate, the reaction holder and the bottom plate. The elements shown on these figures are alternatives to the top cover plate, the reaction holder and the bottom plate. Essentially, instead of applying the two mentioned plates and the holder (top, reaction and bottom), the arrangements disclosed in figures 5, 6 and 7 can be applied instead. On the column 59 a holder 47 for holding the arrangement, i.e. the elements shown on these figures, is located. The arrangement is a sandwich construction consisting of: an O-ring 13, a lower sieve plate 19, which is fixed thus it cannot be revolved, and an upper sieve plate 18 i.e. a holder for vessels, which holder is rotatably by means of the cam ring 17 and cam disc 16, whereby the upper sieve plate 18 can be revolved relatively to the top plate 67.

The upper sieve plate 18 defines a centre line 7 around which it can be brought to revolve.

The upper sieve plate has the function similar to that of the reaction holder discussed in the foregoing figures, among other things to be a holder for vessels.

Typically, the upper sieve plate is journalled horizontally and rotatably relative to the housing of the oligo peptide synthesis apparatus 40 for rotating round the centre line 7 and has coupling (the cam ring 17) for connecting the upper sieve plate 18 to the drive motor for stepwise revolving the upper sieve plate relative to the housing 27, the top plate 67 and the lower sieve plate.

Alternatively, the upper sieve plate 18 could be directly connected - e.g. by means of a shaft - to the drive motor for stepwise revolving the upper sieve plate as the reaction holder.

Between the lower sieve plate 19 and the upper sieve plate 18 a cam ring 17 co-operating with the cam disc 16 is located.

The cam disc is e.g. mounted on top of a shaft (not shown) of a clutch or directly mounted on or connected to a motor shaft (not shown), the motor is e.g. a stepper motor.

The cam ring 17 in connection with the cam disc 16 provides for that the upper sieve plate 18 can be revolved. The printed circuit boards 8 in conjunction with the controller 9 control the revolving similar to the control of the movement of the reaction holder as discussed in the foregoing figures.

A rod 51 prevents that the top plate 67 revolves when the upper sieve plate 18 revolves.

The non-rotatably lower sieve plate 19 is provided with non-through going holes into which a synthesis material can be delivered. This synthesis material can - from the vessels 21 located in corresponding holes on the upper sieve plate 18 - be sucked into these vessels, whereby this synthesis material takes part and contributes to/in the synthesis performed in the vessels.

In order to seal the upper sieve plate 18 to the top plate 67 an O-ring 13' is located between these two plates. The top plate 67 has basically a function similar to that of the top cover plate discussed in the foregoing figures.

In order to move (up and down) the top plate 67 together with the upper sieve plate 18 and its O-ring 13' a coupling profiled disc 55 couples the top plate 67 to the upper sieve plate 18. It is only for the up and down movement - and not for the revolving of the upper sieve plate 18 - that the profiled disc 55 couples and connects the top plate 67 to the upper sieve plate 18

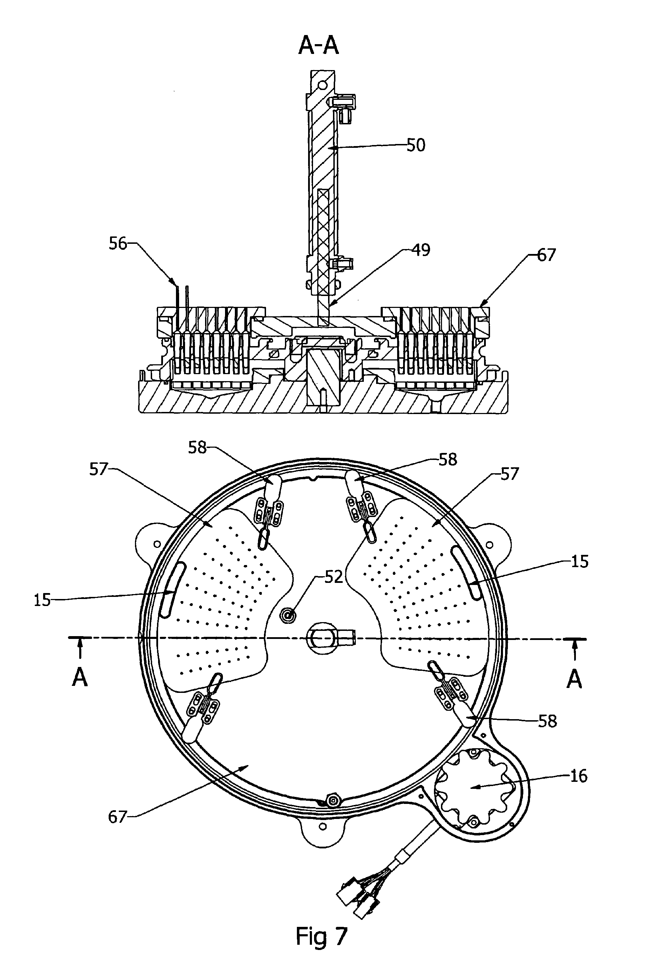

The top plate 67 is provided with a 50 cylinder with a piston and a piston rod 49 (se figure 7) which piston rod is used to move the top plate 67 when coupled to the upper sieve plate 18 up and down. When the top plate 67 is moved up and maintained in that position, the lower sieve plate 19 along with any synthesis material left in the vessels can be replaced together.

Moreover, the top plate 67 is provided with an exchangeable pattern plate 57 with synthesis material lines 56 (e.g. tubes) in a pattern, e.g. in radials of concentric circles having its centre on the centre line 7. Typically the pattern is holes for concentric positioned synthesis material lines 56 corresponding to concentric positioned vessels 21 positioned in the upper sieve plate 18.

Synthesis material lines 56 are supported relatively to the housing 27, e.g. the synthesis material lines 56 with corresponding discharge ends are mounted on the exchangeable pattern plate 57 mounted on the top plate 67, thus synthesis material lines 56 are in a very accurate positions over openings of the vessels 21.

The exchangeable pattern plate 57 can be locked and unlocked to the top plate 67 by means of a lever 58. To further ease removal and repositioning of the pattern plate 57, the pattern plate 57 is provided with a handle 15. To seal the pattern plate 57 to the top plate 67 a gasket 14 is located in between these plates.

It is convenient that the pattern plate 57 is exchangeable, e.g. for replacement of the plate or for the cleaning or replacement of synthesis material lines 56 coupled to the pattern plate. The synthesis material lines define discharge ends being positioned for allowing a specific discharge end to be positioned above an opening of a vessel 21.

A shaft 48 located in the centre of the holder 47 for holding the above-discussed arrangement centres the upper sieve plate 18 precisely. Accordingly, the upper sieve plate 18 - when revolved stopped, revolved and stopped again - will be in correspondingly precise stop positions.

The O-rings 13 has the same functionality as the previously discussed sealing of the reaction holder to the bottom plate, i.e. to avoid air to entrain.

In order to control the revolving of the upper sieve plate 18 an index point (not shown) and a sensor (not shown) could be provided as previously discussed in relation to the reaction holder. The index point could be a protruding pin or tap. The sensor could be located on the bracket or on the housing 27 (see figure 2) of the synthesis apparatus and the index point could be located on the peripheral rim of the upper sieve plate 18. The sensor provides an electrical signal to the printed circuit board 8, which then knows when the index point in the revolving movement of the upper sieve plate 18 passes or passed the sensor.

In principle, more upper sieve plates could be stacked on top of each other, e.g. two upper sieve plates are applied: a top upper sieve plate and a bottom upper sieve plate, the bottom of a vessel of the top upper sieve plate will be in communication with the top of a vessel of the bottom upper sieve plate and syntheses material will then be supplied such that the two vessels mentioned are sequentially supplied with synthesis material. Correspondingly, three, four, etc upper sieve plates could be stacked on top of each other, etc.

fig. 8, 9, 10 and 11 show drawings of embodiments of the synthesis apparatus's reaction holder. A vessel 21 is located in a corresponding receptor 63 on the reaction holder 20, the receptor 63 is e.g. an opening, e.g. a through hole for receiving the vessel 21. The receptor is an opening 63 bored as a through hole for receiving the vessel 21, the through hole having a diameter corresponding to the diameter of the vessel. The vessel can be mounted in the through hole by means of gluing or as a press fit.

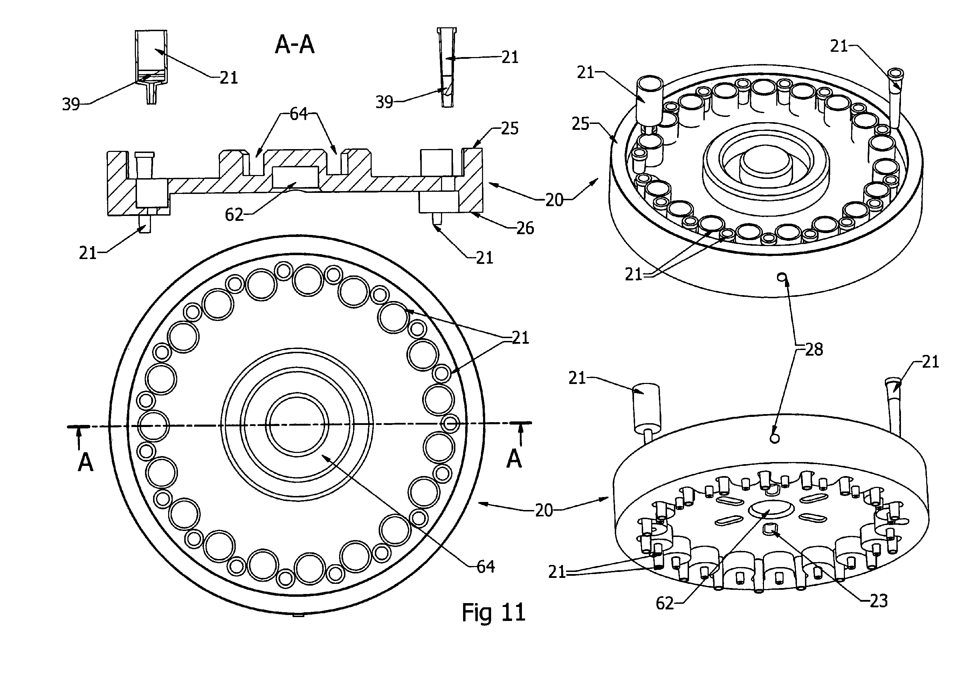

In an exemplary embodiment of the invention, a number of vessels 21 are located in the same distance from the centre (centre of the shaft receiver hole 62) of the reaction holder, i.e. the vessels 21 are located in a circle. When more vessels are needed, these many vessels are located in concentric circles, see figure 11. An example of vessels located in concentric circles can be found in figure 5 (the vessels on the upper sieve plate 18). This pattern of vessels can also be applied to corresponding receptors or holes made in the reaction holder 20. As shown on the perspective drawings in figure 11 - along an outer concentric circle - small sized vessels are located and along another - inner - concentric circle larger sized vessels are located. The locations, i.e. holes or receptors for the small sized and larger sized vessels, respectively can be switched. Moreover the reaction holder can be provided with three, four, five, etc concentric circles, each circle having small diameter and/or larger diameter holes provided along its periphery for correspondingly small and big sized vessels. Furthermore, the receptors can be in any through going hole shape, e.g. a through going hole having the shape of a triangle, oval shape, a cone shaped through going hole having the largest diameter on the op the hole, etc each hole adapted to receive the vessel. Accordingly, in any case to reflect the pattern of vessels or holes located on the reaction holder 20, the top cover plate 10 (see figure 3) can be provided with a like pattern of holes, to which holes lines or tubes are connected.

However, it is sufficient to have one single line or tube provided on the top cover plate to reflect each underlying (on the reaction holder) aligned number of circular arrangement of holes for the corresponding number of located vessels. To speed up the process each located vessel will have a corresponding line or tube through which synthesis material can be fed to that vessel.

Each vessel comprises a filter 39 in which synthesis takes place in the vessel 21. The filter 39 comprises a polystyrene surface or so-called CPG, i.e. controlled pore glass.

The synthesis takes place between the synthesis material already present in the filter and any further synthesis material(s) added thereto.

Since holes for vessels typically are located along the periphery of more concentric circles, the reaction holder 20 is made of a disc of e.g. aluminium having a substantially circular shape. Correspondingly, the top cover plate is of a like shape. The reaction holder 20 defines a centre line 7 around which it can be brought to revolve.

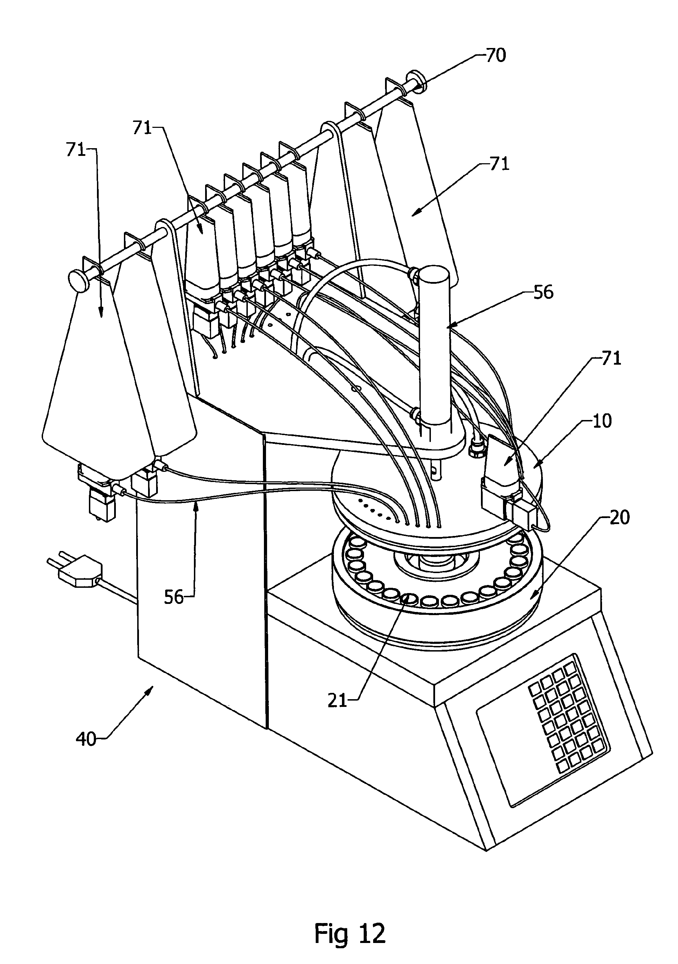

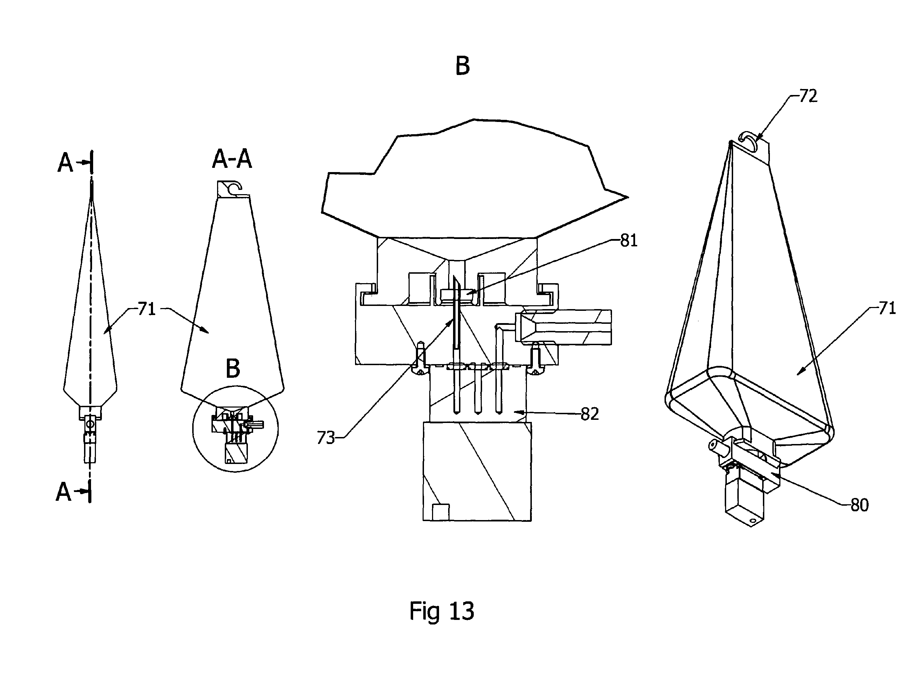

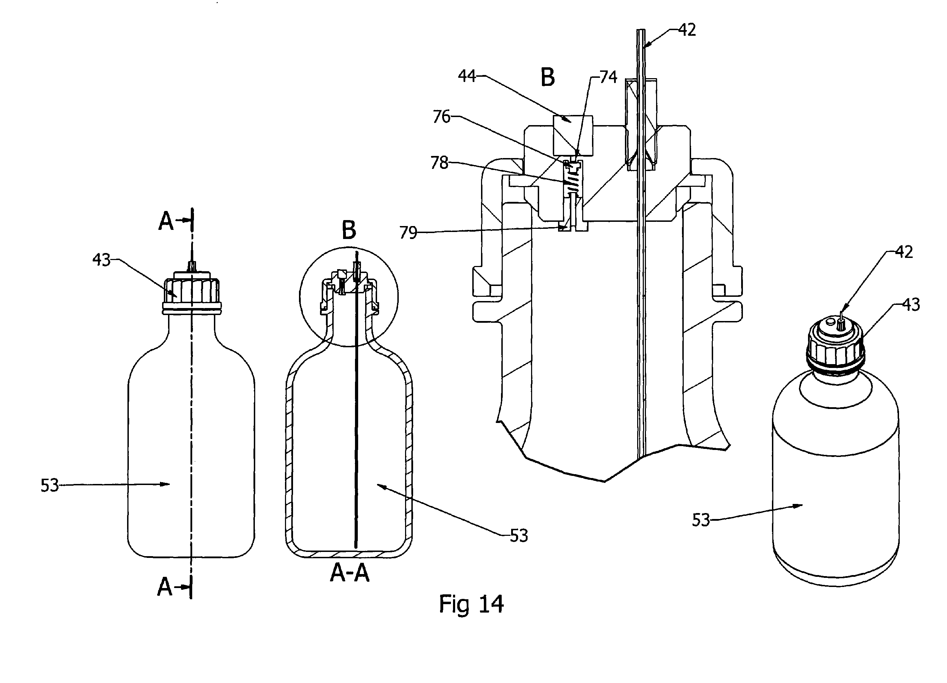

fig. 12 shows a perspective drawing of an embodiment of the synthesis apparatus's top cover plate, reaction holder and gallows. Softwalled containers 71 - see figure 14 for more details - are located and hung from gallows 70 and/or positioned on top of the top cover plate 10. These containers - along with rigid walled supply containers - see figure 13 for more details - are located on or relative to the apparatus 40. The containers are used to supply synthesis materials to the vessels 21 located on the reaction holder 20 by means of synthesis supply lines 56.

fig. 13 shows a perspective drawing and a cross sectional view of an embodiment the synthesis apparatus's soft walled supply container. This soft container, e.g. a bottle is made of PP, PE or from other similar or comparable chemical resistant materials. The bottom part of the supply container is manufactured in a shape that fits the manifold 80, which e.g. is made of PEEK, glass filled PE, acid resisting steel or a material having similar or comparable properties. The upper part of the container 71 - the housing the container - has thin and flexible walls. These provide for that the container during its emptying collapses, i.e. no material need to replace the sucked out synthesis material. In the lower part of the container a gasket 81 is provided. The gasket 81 is made of FPM or other comparable chemical resistant rubber, i.e. resistant to synthesis material. When the manifold 80 is mounted to the container 71 the cannula 73 - which is located in the manifold - cuts its way through the gasket 81 and the synthesis material contained in the container can run through the cannula 73 and be sucked by the pump 82. When the manifold 80 is dismantled from the container 71 the cannula 73 is withdrawn from the gasket and the hole made in the gasket closes itself, i.e. the rubber of the gasket closes the hole. The penetration of a cannula 73 through a gasket and that the hole made in the gasket closes itself when needle or cannula is remove again is a principle known from the double pointed needles applied in hypodermic syringes. A hook 72 is used to hang the container to the gallows discussed in the foregoing figure. No dry air, e.g. no argon, helium nor nitrogen need be supplied as pressure relief since the container collapses as discussed above. It is an advantage that the container - through means and through a hole in the cannula 73 - can be filled with synthesis material. Since the rubber gasket automatically closes itself it is ensured that the humid sensitive synthesis material is not subjected to humid air, i.e. humid non-dry surrounding atmospheric air is not allowed to entrain the container. Moreover due to the construction as discussed above, the container can be emptied almost completely when the walls of the container collapses. Accordingly, very small amounts of synthesis material are wasted in the container.

fig. 14 shows a perspective drawing and a cross sectional view of an embodiment the synthesis apparatus's rigid walled supply container. The supply container in this embodiment as opposed to the foregoing embodiments soft walled container has a rigid wall. In the cover 43 of the supply container, e.g. the bottle 53 for the supply of synthesis material a build in valve 76 and a filter 44 for transporting in atmospheric air and drying of the atmospheric air are provided. When the synthesis material is sucked or pumped - e.g. by means of a pump connected to the supply line 42 - dry air (as opposed to the non-dry atmospheric air) need to be supplied to the container. Dry air is needed to avoid spoiling the humid sensitive synthesis material contained in the bottle. If atmospheric air was provided there is a risk that the sensitive synthesis material is subjected to the humid inevitably contained in the surrounding atmospheric air. The valve 76 also helps to compensate the low pressure (as compared to the surrounding atmospheric air) as the result of pumping out synthesis material from the bottle. Since the walls of this bottle are rigid these cannot during the emptying process - i.e. pumping out synthesis material - collapse inwardly. The surrounding atmospheric air drawn into the bottle passes through the filter 44 and is thereby dried, subsequently the dry air passes through a hole 74 and a gasket 76, which also acts as a non return valve, i.e. the dry air and the synthesis material cannot pass through the gasket in the direction out of the bottle. Hereby it is ensured that no vapour or fume from the synthesis materials escapes the bottle through the filter 44. The gasket can be made of e.g. PTFE, FPM or similar chemical resistant materials, i.e. a material in general resistant to the synthesis material. The spring 78 secures that the gasket 76 is kept closed. The screw 79 keeps the spring in place and can be used to adjust the pressure from the spring 78.

The advantage is that pressure which equals that of the surrounding atmospheric air is only required inside the bottle, i.e. no additional pressure is required to be provided, this would be the case if a valve was used instead of a pump to force the synthesis material out of the bottle through the supply line 42. Moreover, It is an advantage that a pump can control the flow of synthesis material from the bottle very precisely.

fig. 15 shows a drawing of synthesis material flow and dry air flow along with a method description. Dry air (e.g. nitrogen, argon or helium) from the bottle 68 is applied to the two pneumatic controls of the cylinder 50, to control synthesis material to and from the vessels 20 and into the waste container 83. The synthesis material is provided from the supply container 53, e.g. a bottle containing the synthesis material, by means of a reduction valve 95 and a valve 99, which latter valve can be controlled to be opened or closed. Dry air is pumped into the supply container 53 from the bottle 68. The synthesis material is forced out of the supply container 53 to a valve or pump 98. Subsequently, the valve passes or the pump pumps the synthesis material to and through a material supply line located on the top cover plate. The line is controlled to allow a discharge of the material to a corresponding vessel 21 located on the reaction holder 20. The line is controlled to allow the discharge the material to the vessel, when the reaction holder 20 is correct aligned under the top cover plate 10 in case the synthesis selected requires the specific synthesis material available in the line.

For the movements up and down of the cylinder, valves 90 and 91 respectively are applied. Reference 92 shows corresponding speed controllers for the up and down movement of the cylinder, likewise references 93 and 94 show two reduction valves by which pressure for each connection of air to the cylinder is adjusted and controlled.

Reference 96 shows the reduction valve for dry air, i.e. nitrogen, argon or helium supplied from the bottle 68. Reference 97 - the vacuum pump as shown on figure 4 - shows a vacuum pump by which material (e.g. synthesis material) can be sucked out from a particular vessel after use, e.g. the synthesis material that was provided and present in the filter of the vessel in a certain time. This synthesis material is sucked out of the vessel - by means of the vacuum pump 97 - to end up in the waste container 83.

Reference 100 shows a non-return valve, which is applied to avoid that odour from the synthesis material escapes into the atmospheric air. Finally, reference 101 shows a drain valve, which is applied to control when synthesis material is to be transported (sucked) to the waste container 83.

When the synthesis material is sucked out of the vessels - by means of the pump 97 connected to the bottom plate 30 - dry air (as opposed to the non-dry atmospheric air) need to be supplied to the synthesis apparatus to compensate for the pressure difference arising from the sucking. The sucking takes place in a closed stage of the apparatus 40, i.e. the top plate 10, the holder 20 and the bottom plate 30 are forced together by means of the cylinder 50 being in its down position.

If dry air (argon or helium) at that stage - by means of the coupling 52 - is not supplied, atmospheric air would seek to entrain to replace the vacuum arising from the sucking. Dry air has to be supplied to avoid spoiling the humid sensitive synthesis material contained in the vessels and to avoid spoiling the synthesis taking place in the filter of the vessel. If atmospheric air was allowed to entrain (e.g. through small openings in o-rings or gaskets) there is a risk that the sensitive synthesis materials present in filers of the vessels are subjected to the humid contained in the surrounding atmospheric air.

Moreover the pump 97 is used to remove synthesis material - by sucking through the drain valve 101 - when the synthesis material has been present in the filters of the vessels for a sufficient long predetermined time.

The apparatus is applied as follows:

the reaction holder 10 is mounted in the apparatus, e.g. on top on the bottom plate 30, typically this operation takes place without the use of hand-tools and in an open stage of the apparatus 40, i.e. the top plate 10, the holder 20 and the bottom plate 30 are located apart by means of the cylinder 50 being in its upper position. prior to the mounting of the reaction holder, this holder is provided with a number of vessel(s) needed for the synthesis(e)s and a corresponding number of containers are supplied (i.e. filled or taken from stock already filled) with synthesis material, these containers of course are connected to corresponding synthesis material lines 56, accordingly dry air is secured to be present (and with the right pressure) from the bottle 68 prior to use,

a software program is present is the personal computer and by means of this program a command is given with the result that the apparatus 40 enters a closed stage, i.e. the top plate 10, the reaction holder 20 and the bottom plate 30 are forced together by means of the cylinder 50 controlled to move to its down position.

now the apparatus is in the desired stage, i.e. the apparatus is closed, vessels are in place in the receptors of the reaction holder, the containers are ready with the synthesis material needed and dry air is ready to be consumed,

the software program then revolves - by means of power to the motor and to the shaft - the reaction holder to find the holders initial position, i.e. when the index point of the holder is opposite the sensor - during the revolving - the software program has found the initial position of the reaction holder. However the initial position of the reaction holder could be known from a former run, in this case there is no need to find it again.
1) subsequently, the software program revolves the reaction plate further in order to position the holder such that a specific vessel (or more vessels) is located under a specific synthesis material line (or more specific synthesis material lines),
2) subsequently, the software program discharges synthesis material to the specific vessel, alternatively the software program discharges synthesis materials to specific vessels,
3) subsequently, the software program allows a timer (e.g. software or hardware implemented) to run out, during this time the synthesis material(s) syntheses in the filter(s)
4) and, if needed at this stage of the process, the pump 97 is controlled to suck specific synthesis material(s) from specific vessel(s),
   if the synthesis requires the addition of more synthesis material(s) the method loops back to 1) and continues from this point, if however the synthesis requires no more synthesis material the apparatus 40 enters an open stage again, i.e. the top plate 10, the reaction holder 20 and the bottom plate 30 are forced apart by means of the cylinder 50 controlled - by means of the software program communicating with the printed circuit board - to move to its upper position,
   the reaction holder 20 can then be taken out from the apparatus, for a subsequent analysis of the materials now contained in its vessels, for replacement, for cleaning or for replacement or addition or vessels.

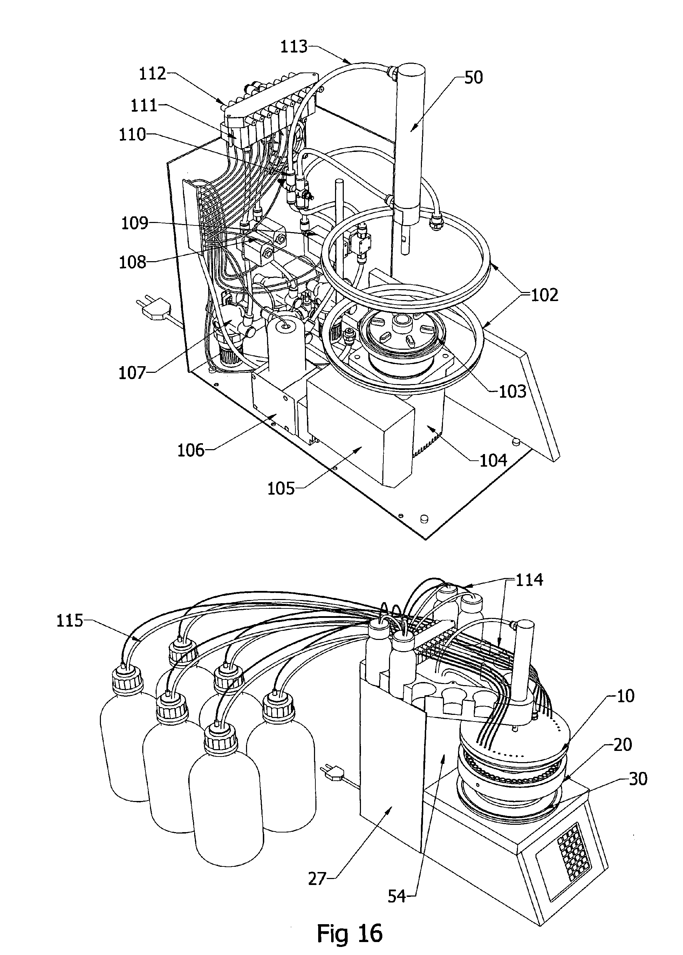

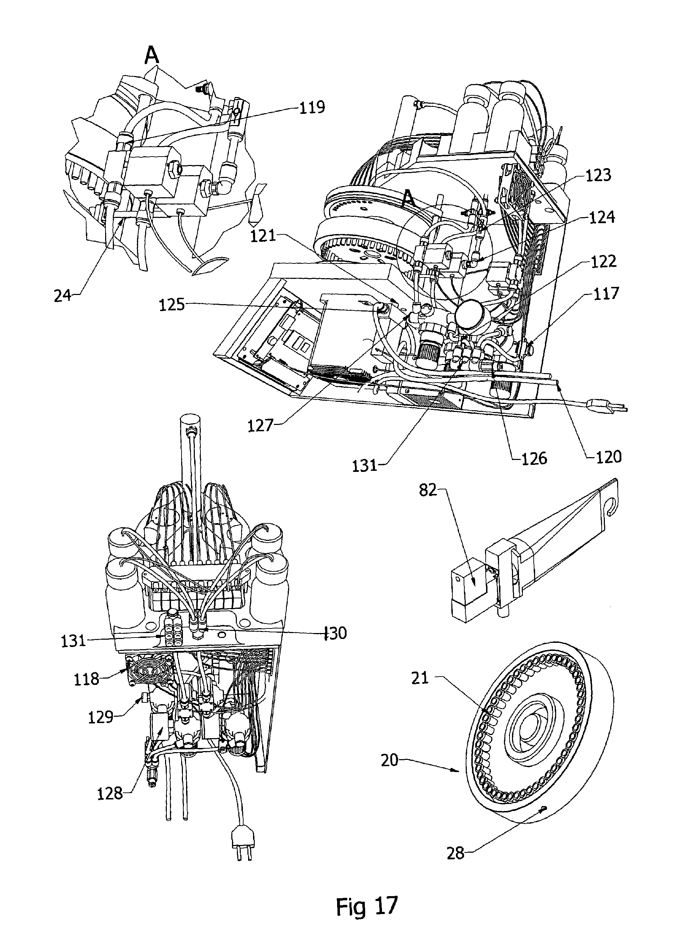

fig. 16 and 17 show an embodiment of synthesis apparatus with a part list, the embodiment shows elements selected and applied by the applicant.

Listing of parts used, with part numbers and information of the supplier: sensor 24 with part number XS1N05PA310 from Telemecanique, index point 28, a set screw with part number 529-961 from RS components, linear Actuator 50 with part number CDG1BN20-100+NT-02 from SMC, micro pump 82 with part number 156 992 from Bürkert, v-ring 102 in FPM with part number 401600 from SKF, oil seal103 in PFM with part number 0709010A-FPM from Dichta, step motor 104 with part number MDIF3431-E from IMF, power supply 105 with part number NFS110-7602P from Computer Products, pump 106 with part number MN811KNDC24V from KNF, regulator 107 with part number R07-100-RNKG from Norgren, 2/2 Valve 108 with part number 137 103Q from Bürkert, 3/2 Valve 109 with part number 134 163K from Bürkert, speed Controller 110 with part number AS1001 F04 from SMC, valve 111 with part number 140 470 from Bürkert, fitting 112 with part number 008NF16YC5B from Omni-Fit, tubing 113 in PTFE with part number 1005T040025 from Legris, tubing 114 in PTFE with part number 008T16-050-20 from Omni-Fit, tubing 115 in PTFE part number 008T32-150-10 from Omni-Fit, vessels 21, i.e. 40 nmol columns part number 4316671 from Applied Biosystems, D Connector 117 with part number F09S-K700 from FCT, fan 118 with part number 2406KL-05W-B10-L00 from NMB, straight adapter 119 with part number 1821 10 10 from Legris, tubing 120 in PTFE with part number 227-5032 from RS components, male straight adapter 121 with part number 3805 06 10 from Legris, blanking plug 122 with part number 3126 04 00 from Legris, non-return Valve 123 with part number 7996 04 00 from Legris, male elbow 124 with part number 3199 04 19 from Legris, male straight adapter 125 with part number 3101 04 10 from Legris, female stud adapter 126 with part number 3114 06 10 from Legris, banjo adapter 127 with part number 3118 04 10 from Legris, pressure gauge 128 with part number 447-8946 from RS components, pressure gauge 129 with part number 435-9615 from RS components, branch Y adapter 130 with part number KQUD04-01 S from SMC, and sextuple banjo adapter 131 with part number KQZT04-01S from SMC.

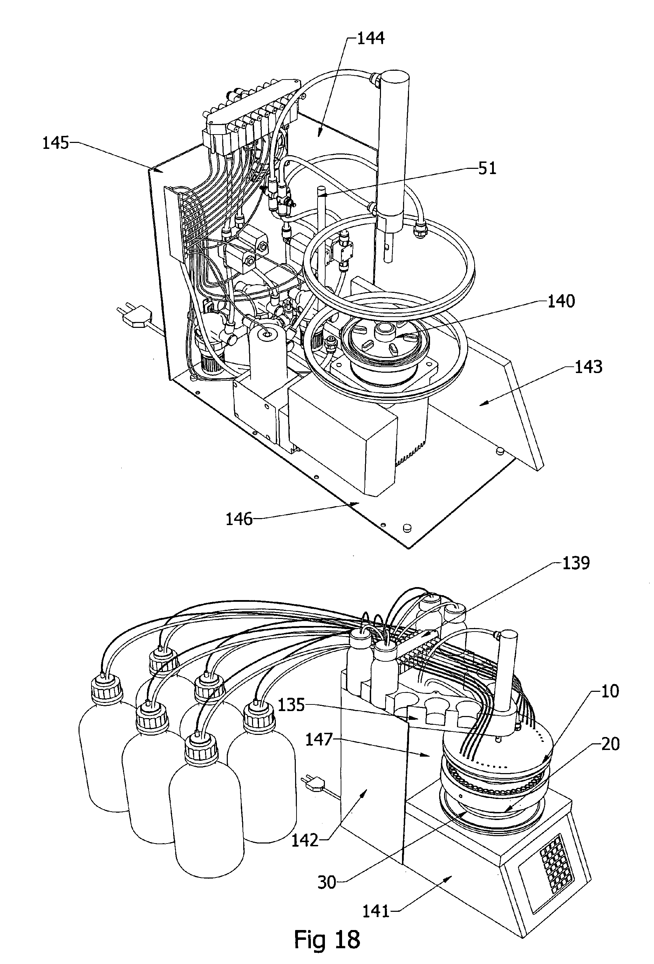

fig. 18 shows an embodiment of synthesis apparatus with material selection. The embodiment shows materials for elements selected and applied by the applicant: a top cover plate 10 as a lid most preferably made in POM, a reaction holder 20 as a plate most preferably made in POM, a bottom plate 30 as a drain chamber most preferably made in POM, a bottle holder 135 most preferably made in POM, a valve manifold 139 most preferably made in PEEK, a motor flange 140 most preferably made in POM, a right and a left side plate, 141 and 143 respectively, most preferably made in Aluminium, a left and a right side sheet, 142 and 144 respectively, most preferably made in Aluminium, a back 145 and bottom sheet 146 both most preferably made in Aluminium, a housing 27 and a bracket 54, both most preferably made in Aluminium, a post 147 most preferably made in Aluminium and a rod 51 most preferably made in Stainless steel.

The embodiment below shows materials for elements, which instead could be selected and applied by the applicant: the top cover plate 10 as the lid preferably made in PP, PE, PEEK, Aluminium, glass or Stainless steel, the reaction holder 20 as the plate preferably made in PP, PE, PEEK, PTFE, Aluminium or Stainless steel, the bottom plate 30 as the drain chamber preferably made in PP, PE, PA, PEEK, PTFE, Aluminium or Stainless steel, the bottle holder 135 preferably made in PP, PE, glassfilled PE, PVC, PA, PEEK, PTFE, Aluminium, or Stainless steel, the valve manifold 139 preferably made in PEHD, PTFE, PP or Stainless steel, the motor flange 140 preferably made in PEEK, Aluminium or Stainless steel, the right and left side plate, 141 and 143 respectively, preferably made in Stainless steel, the left and right side sheet,142 and 144 respectively, preferably made in Stainless steel, the back 145 and the bottom sheet both preferably made in Stainless steel, the housing 27 and the bracket 54, both preferably made in Stainless steel, the post 147 preferably made in Stainless steel, and the rod 51 preferably made in Aluminium.

POM has the advantage that it is a relatively cheap material and is easy to finish as compared to stainless steel.

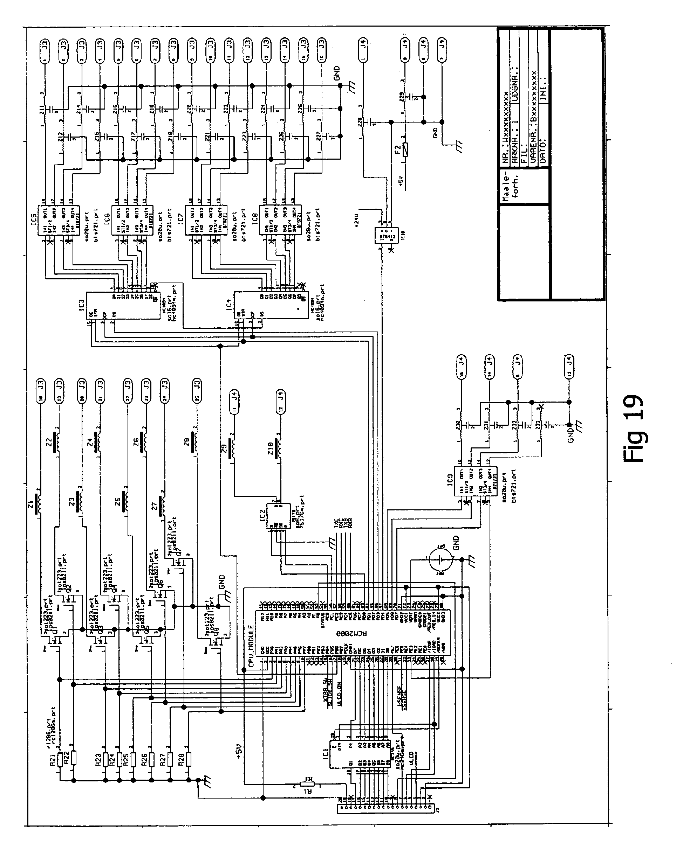

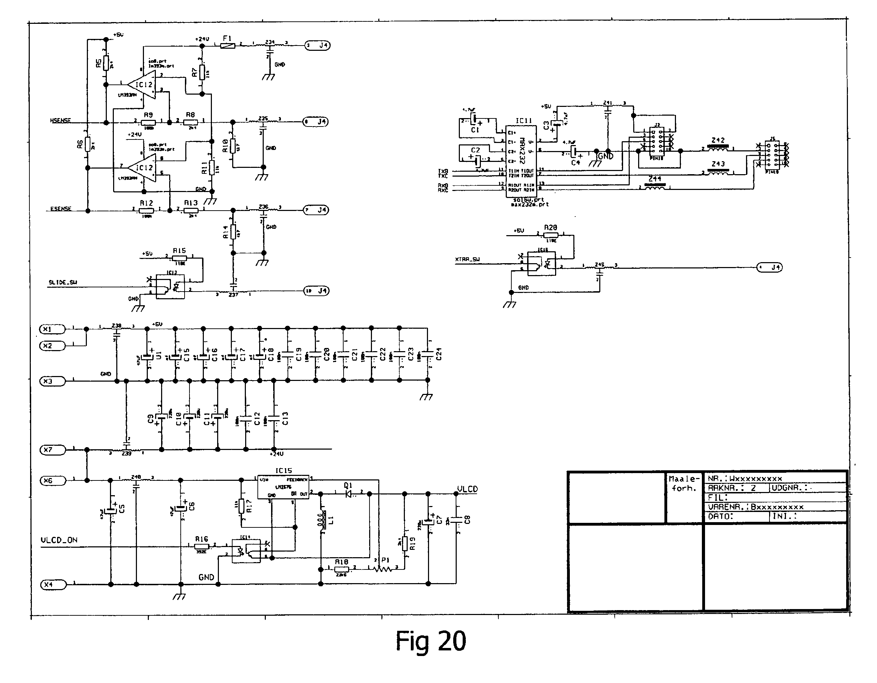

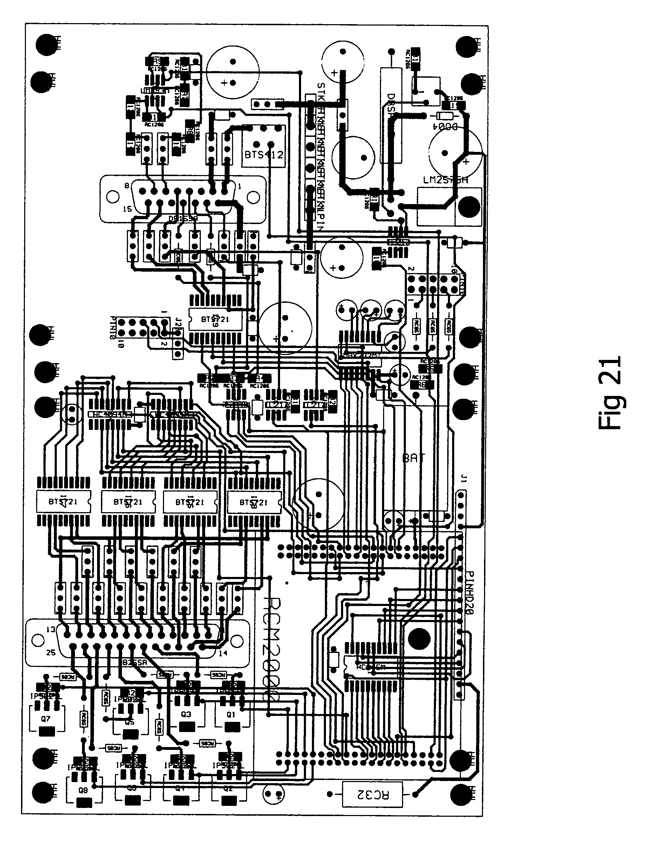

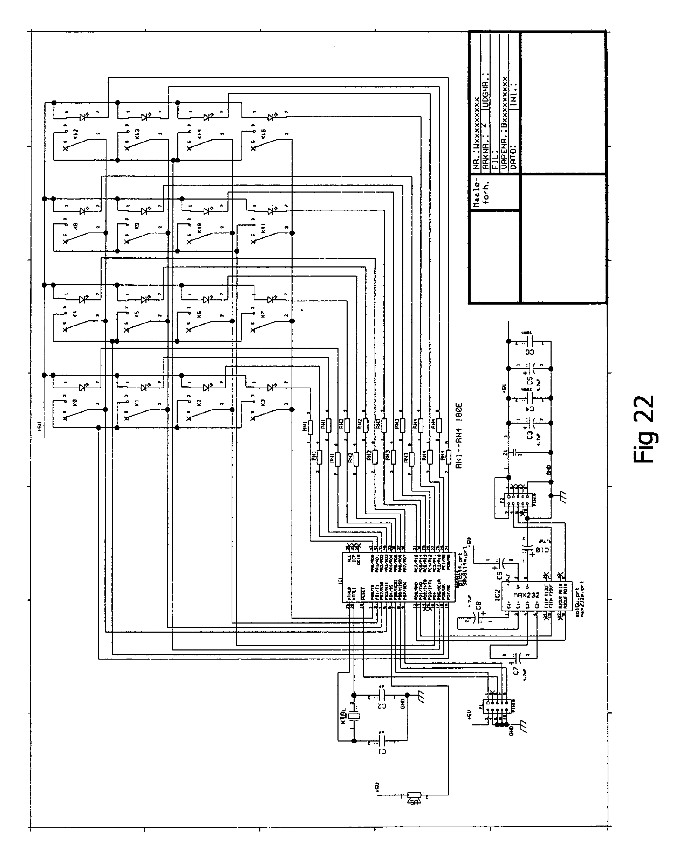

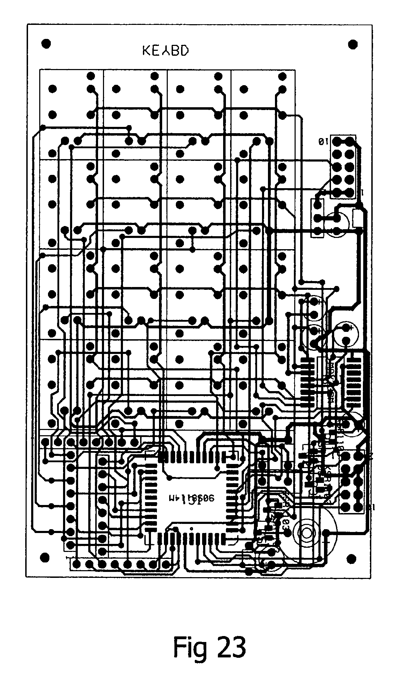

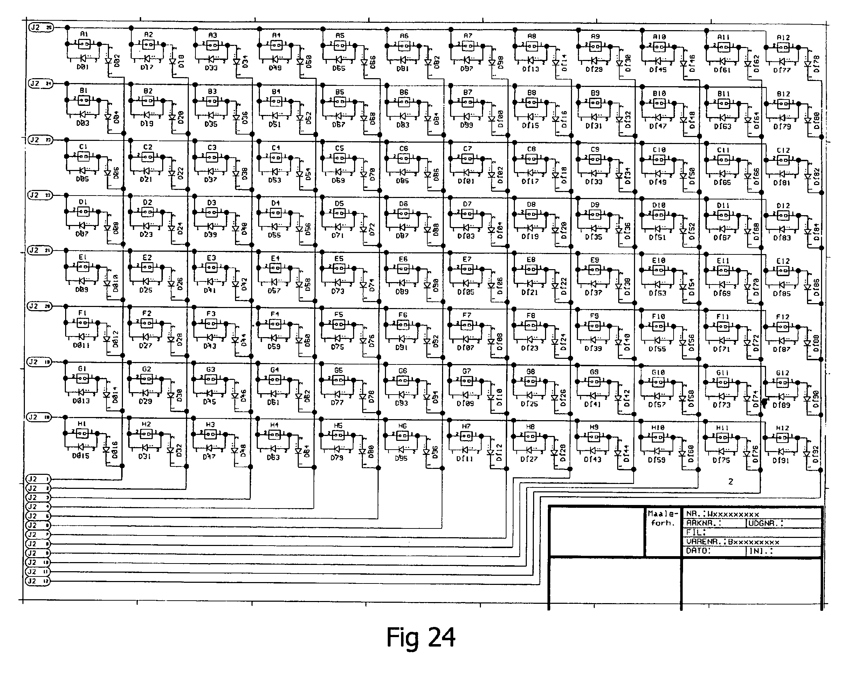

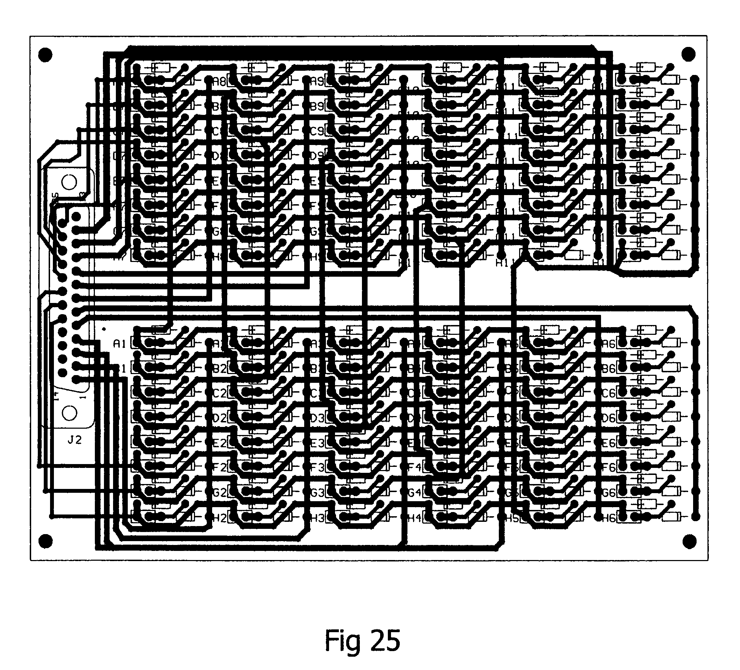

Figures 19 - 25 show electronic diagrams for the control of the synthesis apparatus.

The circuitry implemented on the printed circuit board corresponds to these electronic diagrams. In the light of the foregoing discussion these diagrams are considered to be self-explanatory.

## Claims

1. An oligo peptide synthesis apparatus, comprising:
i) a housing,
ii) a drive motor mounted in said housing and having an output shaft,
iii) an oligo peptide synthesis reaction holder defining a centre line, said holder comprising a first number of receptors for receiving a corresponding number of vessels, said receptors being located on a first circle having its centre on said centre line, said holder having a coupling for connecting said holder to said drive motor, said holder being journalled horizontally and rotatably relative to said housing for stepwise revolving around said centre line relative to said housing powered by said drive motor, and
iv) a second number of synthesis material lines supported relatively to said housing, each of said lines communicating with a supply container and each of said lines defining a discharge end, said discharge ends being positioned on a second circle having its centre on said centre line for allowing a specific discharge end to be positioned above a specific vessel received in said holder.

2. The oligo peptide synthesis apparatus according to claim 1 further comprising a bottom plate for rotating said holder, said bottom plate having engagement means for coupling to said holder.

3. The oligo peptide synthesis apparatus according to claim 2, said engagement means comprising carriers adapted to engage with corresponding holes located on said holder.

4. The oligo peptide synthesis apparatus according to any of the preceding claims further comprising a top plate having said second number of synthesis material lines.

5. The oligo peptide synthesis apparatus according to any of the preceding claims, said top plate, bottom plate and holder each being made of a plate of a substantially circular shape having its centre on said centre line.

6. The oligo peptide synthesis apparatus according to any of the preceding claims, said top plate most preferably being made of a POM material, preferably of PP, PE, PEEK, aluminium, glass or stainless steel materials.

7. The oligo peptide synthesis apparatus according to any of the preceding claims, said holder most preferably being made of a POM material, preferably of PP, PE, glassfilled PE, PEEK, PTFE, aluminium or stainless steel materials.

8. The oligo peptide synthesis apparatus according to any of the preceding claims, said bottom plate most preferably being made of a POM material, preferably of PP, PE, PA, PEEK, PTFE, aluminium or stainless steel materials.

9. The oligo peptide synthesis apparatus according to any of the preceding claims further comprising an enclosure assembly defining an inner chamber in which said reaction holder is enclosed and communicating with a vacuum pump for evacuation of said inner chamber.

10. An oligo peptide synthesis reaction holder defining a centre line, said holder comprising a first number of receptors for receiving a corresponding number of vessels, said receptors being located on a circle having its centre on said centre line and the holder having a coupling for connecting said holder to a drive motor for stepwise revolving said holder.

11. The reaction holder according to claim 10 having an index point indicating the revolved position of said reaction holder.

12. The reaction holder according to any of the preceding claims, said number of receptors is 10-1000, such as 10 - 900, e.g. 100 - 800, preferably 200 - 700, further preferably 200 - 500, 300 - 400, 300 - 350, 350 - 400, 400 - 450 and 450 - 500.

13. The reaction holder according to any of the preceding claims, said vessels comprising a number of wells, a number of columns or combinations thereof.

14. The reaction holder according to any of the preceding claims, said vessels each having a filter comprising a polystyrene surface or controlled pore glass (CPG).

15. The reaction holder according to any of the preceding claims the holder being made of a plate of a substantially circular shape having its centre on said centre line.

16. The reaction holder according to any of the preceding claims the holder most preferably being made of a POM material, preferably of PP, PE, PEEK, PTFE, aluminium or stainless steel materials.

17. A method of performing an oligo peptide synthesis by means of said oligo peptide synthesis apparatus according to claims 1 to 9, said method comprising the steps of:
mounting a reaction holder in said oligo peptide synthesis apparatus,
revolving the reaction holder for finding its initial starting position, if the initial starting position is not known from a former run,
revolving the reaction holder for being in position under a specific synthesis material line,
discharging synthesis material to a vessel,
allowing a timer to run for a predetermined time,
sucking synthesis material from the vessel, and
removing the reaction holder from said oligo peptide synthesis apparatus.
